# EUROPEAN PATENT SPECIFICATION

(11) **EP 0 444 908 B1**
(45) Date of publication and mention of the grant of the patent: **14.09.1994**
(21) Application number: 91301608.5
(22) Date of filing: 27.02.1991
(51) Int. Cl.: H02K 9/06, H02K 9/04, H02K 3/00

(54) **Armature for an electric motor**
Anker für einen elektrischen Motor
Induit pour un moteur électrique

(30) Priority: 28.02.1990 GB 9004543
(43) Date of publication of application: 04.09.1991
(73) Proprietor: Black & Decker Inc., Newark Delaware 19711 (US)
(72) Inventor: Bonacina, Sergio, I-22043 Galbiate (IT)
(74) Representative: Randall, John Walter

(56) References cited:
- EP-A- 0 261 306
- DE-A- 1 613 189
- DE-C- 870 578
- DE-U- 1 719 042
- US-A- 2 319 194

## Description

This invention relates to a wire-wound armature for an electric motor, having a shield for the windings which is mounted for rotation with the armature.

In motors used in some power tools such as angle grinders, there is a significant risk of damage to the armature winding, which is usually exposed at at least one axial end, from foreign particles such as debris from the workpiece. A cooling fan is usually provided, and the particles are drawn into the flow of cooling air and if no shield is provided they may then be deflected by the fan onto the winding, often with repeated impacts due to the particles bouncing between the windings and the fan or the motor housing.

It is already known from U.S. Patent No. 2319194 to make the cooling fan in the form of a dome-shaped metal cage which fits closely over the axial end of the armature winding; the cage carries radially-projecting metal blades which act as a radial-flow fan and also serve as heat-dissipating fins. The cage which carries the blades is said to form a shield for the windings, to reduce the danger of foreign objects contacting and injuring the windings.

In a more recent development disclosed in European Patent Application No. 0261306, the protective cage has no fan blades and is distinct from a radial-flow fan; the cage has axially-extending curved ribs which are said to protect the windings from particles deflected from the fan or the motor housing. The fan is of substantially greater radius, and draws air axially over the motor and then expels it radially outwardly.

The purpose of the invention is to improve the effectiveness of the cooling of the armature winding itself, and maintain or improve the protective shielding of the winding, in as simple and inexpensive a manner as possible.

Accordingly, the invention provides a wire-wound armature, the armature windings being exposed at least at one axial end of the armature, comprising a shield for the windings secured coaxially over the exposed axial end of the armature closely adjacent the windings for rotation therewith, the outer surface of the shield having a radius no greater than the armature, characterized in that the shield consists of an axial flow fan whose blades are shaped to draw cooling air over the windings and also to protect the windings from impact by deflecting any foreign particles travelling axially towards the said axial end of the armature.

Preferably the blades of the shield, when viewed axially of the armature, occupy more than 50% of the effective area of the shield. More preferably the blades occupy more than 75%, e.g. about 80% of the effective area of the shield.

When rotated such as to direct a flow of cooling air axially away from the windings, the axial flow cooling fan tends to draw air radially inwardly and thus onto the armature windings more effectively than is the case with a radial flow fan of a similar size.

Preferably, the armature comprises a principal cooling fan secured coaxially to the said axial end of the armature over, and closely adjacent, the axial flow cooling fan, whereby the axial flow cooling fan assists the principal cooling fan in drawing air through the motor and also protects the armature windings from impact from foreign particles travelling downstream over the armature and deflected back upstream by the principal fan.

The principal fan is preferably a radial flow fan of a radius greater than the axial flow fan. In this case, the cooling air will usually be arranged to be predominately axial along the armature to the principal fan and then radially outward, some of this flow being directed by the axial flow fan onto the armature windings and then axially to the principal fan. It is then essential for the armature to be rotated unidirectionally.

Since armature windings are often curved convex at their axial ends, and since the effectiveness of the axial flow fan is greatest the closer it is to the windings, the fan is preferably a dome-shaped cage, so that it can fit closely over the windings. Conveniently, the axial flow fan is a unitary plastics moulding, preferably comprising at each axial end thereof a ring coaxial with the armature, the ring being connected by a plurality of discrete fan blades.

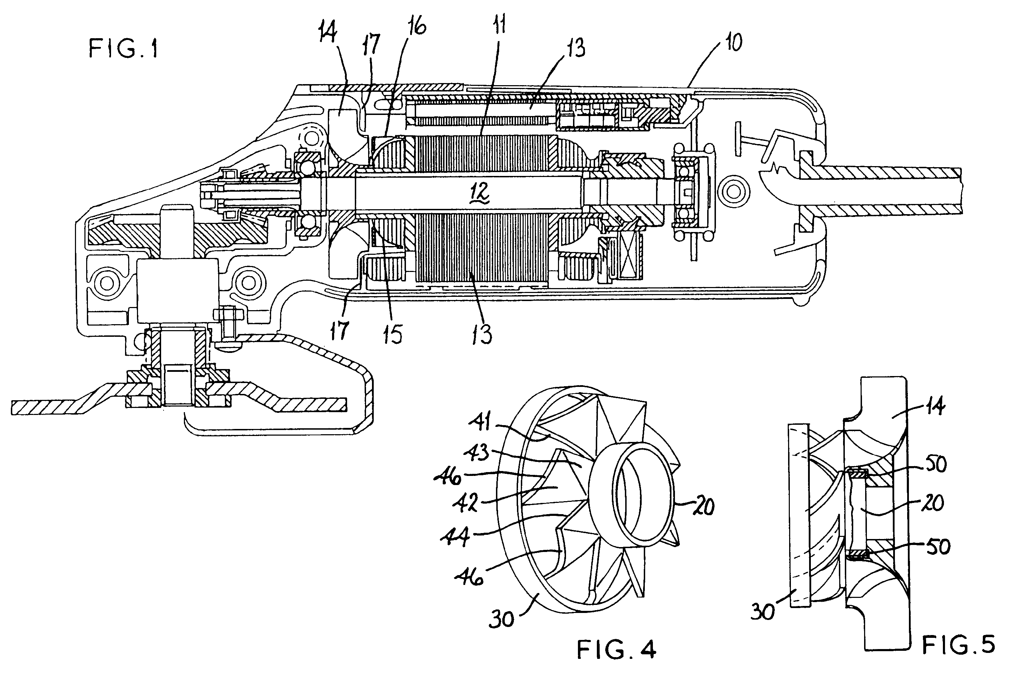

The invention in its other aspects consists in an electric motor having an armature according to the first aspect of the invention, in a portable power tool (such as an angle grinder) comprising such a motor, and in a dome-shaped shield for armature winding in the form of an axial flow cooling fan substantially of the novel configuration illustrated below. An angle grinder containing a motor whose armature embodies the invention will now be described, by way of example only, with reference to the accompanying drawings, in which :-
- Figure 1: is an axial section through an angle grinder,
- Figure 2: is an end elevation of a windings shield at one end of the armature of the motor of the angle grinder of Figure 1,
- Figures 2x and 2a to 2g: are partial sections respectively on the lines X-X and A-A to G-G of Figure 2 showing one blade of the shield,
- Figure 3: is a partial side elevation, from the lift side of Figure 2, showing one blade of the shield.
- Figure 4: is a perspective view, to an enlarged scale, of the shield, and Figure 5 is a side elevation corresponding to Figure 3, to an enlarged scale, showing the shield connected to a principal radial-flow cooling fan.

The angle grinder, whose function need not be described here, comprises a housing 10 for a unidirectional electric motor having stator 13 and an armature 11. An armature spindle 12 is journalled for rotation on an axis which is lengthwise of the angle grinder. Cooling air is drawn in through apertures in the housing 10 overlying the motor, flows generally axially over and through the motor, and into a principal cooling fan 14 of the radial flow type, with planar, radially-directed fan blades. The cooling air is then expelled radially, and directed by internal guide surfaces 17 to emerge through further apertures in the housing 10.

A shield for the armature windings, in the form of a second cooling fan 16, of the axial flow type with curved fan blades, to be described below in greater detail, is in the form of a dome-shaped cage and is secured with a push fit over a dome-shaped end 15 of the armature winding, immediately adjacent and ultrasonically welded at 50 (Figure 5) to the principal fan 14. The radius of the axial flow fan 16 is the same as the armature, so that it causes no obstruction and facilitates assembly. The principal fan 14 is secured coaxially on the armature spindle 12 over the axial flow fan 16, forming a rigid structure so that both fans rotate with the armature. The principal fan 14 has a radius about 50% greater than the armature, although it draws air in over an area no greater than that of the armature. The axial flow fan 16 assists the principal fan 14 by drawing air radially inwardly and then directing it axially towards the principal fan. In so doing, the axial flow fan 16 directs some of the air onto the armature windings 15, to cool them more effectively than would be the case without that fan 16.

Any foreign particulate matter entrained in the air flow and reaching the principal fan 14, or the adjacent internal surfaces 17 of the housing, may be deflected back towards the armature windings 15. The axial flow fan 16 has curved blades which shield the winding very effectively from such particulate matter, and ensure that it is redirected back towards the principal fan 14 for expulsion from the housing. When viewed end on, i.e. axially, the proportion of the effective area of the fan blades, i.e. the proportion of the armature windings covered by the fan blades is over 75%, in this example approximately 80%, and the inclined, curved surfaces of the blades tends to re-direct impinging particles in a predominantly axial direction back to the principal fan 14. Both these factors are considered to account for an improvement over the previously used radial-flow fan for shielding the armature.

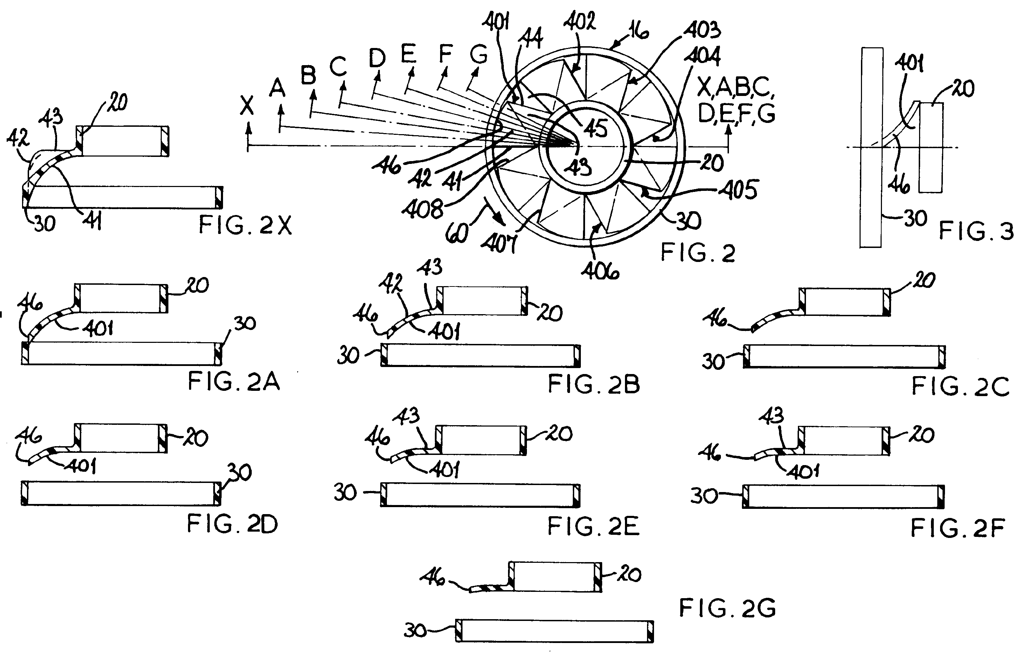

With reference now to Figures 2, 2x, 2a-2g and 3, 4 and 5, the axial flow fan 16 is a unitary plastics moulding having eight identical, équi-angularly disposed, curved blades 401-408, supported rigidly between an outer ring 20 and a larger, inner ring 30. The whole structure is a dome-shaped cage, the curvature of the blades being convex viewed from the outside, end-on to the armature. As shown in Figure 2, viewed axially, there is a sector-shaped gap 45 between each pair of adjacent blades 401, 402. The fan is designed to rotate in the anti-clockwise direction 60, to create an axial flow away from the armature, i.e. from the larger ring 30 to the smaller ring 20. The leading edge 41 of each blade is in a plane containing the axis of the fan, and the trailing edge 44 is straight and perpendicular to the rotational axis, nearly parallel to the plane of the leading edge. The blade has a sector-shaped flat portion 43, generally perpendicular to the axis, connected smoothly to a larger, curved portion 42 bounded partly by the leading edge 41 and a radially outer edge 46. When viewed axially in Figure 2, the outer edge 46 overlies the larger ring 30 to which it is connected at one end only, i.e. at the outer leading corner of the blade; this connection is shown in Figure 2a. When viewed from the side in Figure 3, the outer edge 46 is seen to be smoothly curved, and inclined at an average angle of about 45° to the axis.

Although this particular configuration is convenient for plastics moulding, others are of course possible, provided that they give an axial flow and can be fitted closely over the armature winding. For example, the larger ring 30 could be dispensed with, and there could be a different number of blades, and the curvature and inclination of the blades could be different.

## Claims

1. A wire-wound armature, the armature windings being exposed at least at one axial end of the armature, comprising a shield (16) for the windings secured coaxially over the exposed axial end of the armature closely adjacent the windings for rotation therewith, the outer surface of the shield having a radius no greater than the armature, characterized in that the shield (16) consists of an axial flow fan whose blades (401,-408) are shaped to draw cooling air over the windings and also to protect the windings from impact by deflecting any foreign particles travelling axially towards the said axial end of the armature.

2. An armature according to Claim 1, characterized in that the blades (401-408) of the shield (16) viewed axially of the armature occupy more than 50% of the effective area of the shield.

3. An armature according to Claim 2 characterized in that the blades (401-408) occupy more than 75% of the effective area of the shield.

4. An armature according to any one of the preceding claims characterized in that a principal cooling fan (14) is secured coaxially to the said axial end of the armature over, and closely adjacent, the axial flow cooling fan, whereby the axial flow cooling fan assists the principal cooling fan in drawing air through the motor and also protects the armature windings from impact from foreign particles travelling downstream over the armature and deflected back upstream by the principal fan.

5. An armature according to Claim 4, characterized in that the principal fan is a radial flow fan of a radius greater than the axial flow fan.

6. An armature according any preceding claim, characterized in that the axial flow fan (16) is a dome-shaped cage.

7. An armature according to any preceding claim, characterized in that the axial flow fan (16) is a unitary plastics moulding.

8. An armature according to any preceding claim, characterized in that the axial flow fan (16) comprises at each axial end thereof a ring (20,30) coaxial with the armature, the rings being connected by a plurality of discrete fan blades (401-408).

9. An electric motor comprising an armature according to any preceding claim.

10. A portable power tool comprising an electric motor according to Claim 9.

## Patentansprüche

1. Drahtgewickelter Anker, bei dem die Ankerwicklungen an mindestens einem axiale Ende des Ankers freiliegen, mit einer Abschirmung (16) für die Wicklungen, welche koaxial über dem freiliegenden axialen Ende des Ankers eng benachbart zu den Wicklungen zur Drehung mit ihnen befestigt ist, wobei die äußere Oberfläche der Abschirmung einen Radius hat, der nicht größer als der des Ankers ist, **dadurch gekennzeichnet**, daß die Abschirmung (16) einen Axiallüfter aufweist, dessen Schaufeln (401-408) geformt sind, um Kühlluft über die Wicklungen zu saugen und um außerdem die Wicklungen vor Zusammenstößen zu schützen, indem Fremdpartikel, die sich axial auf das axiale Ende des Ankers zubewegen, abgelenkt werden.

2. Anker nach Anspruch 1, **dadurch gekennzeichnet**, daß die Schaufeln (401-408) der Abschirmung (16) axial vom Anker aus gesehen mehr als 50 % des wirkenden Bereiches der Abschirmung bedecken.

3. Anker nach Anspruch 2, **dadurch gekennzeichnet**, daß die Schaufeln (401-408) mehr als 75 % des wirkenden Bereiches der Abschirmung bedecken.

4. Anker nach einem der vorhergehenden Ansprüche, **dadurch gekennzeichnet**, daß ein Haupt-Kühllüfter (14) koaxial über und eng benachbart zum axialen Kühllüfter an dem axialen Ende des Ankers befestigt ist, wodurch der axiale Kühllüfter den Haupt-Kühllüfter beim Durchsaugen von Luft durch den Motor unterstützt und außerdem die Ankerwicklungen vor Zusammenstößen mit Fremdpartikeln schützt, die mit dem Strom über den Anker mitgeführt werden und durch den Hauptlüfter gegen den Strom zurückgelenkt werden.

5. Anker nach Anspruch 4, **dadurch gekennzeichnet**, daß der Hauptlüfter ein Radiallüfter ist, der einen Radius hat, der größer als der des Axiallüfters ist.

6. Anker nach einem der vorhergehenden Ansprüche, **dadurch gekennzeichnet,** daß der Axiallüfter (16) eine kalottenförmige Schale ist.

7. Anker nach einem der vorhergehenden Ansprüche, **dadurch gekennzeichnet**, daß der Axiallüfter (16) ein einteiliges Kunststoffpreßteil ist.

8. Anker nach einem der vorhergehenden Ansprüche, **dadurch gekennzeichnet**, daß der Axiallüfter (16) an jedem axialen Ende einen Ring (20, 30) aufweist, der koaxial zum Anker verläuft, wobei die Ringe durch eine Anzahl von einzelnen Lüfterschaufeln (401-408) verbunden sind.

9. Elektromotor, der einen Anker gemäß einem der vorhergehenden Ansprüche enthält.

10. Tragbares kraftgetriebenes Werkzeug, das eine Elektromotor nach Anspruch 9 aufweist.

## Revendications

1. Induit à fils enroulés, les enroulements d'induit étant mis à nu au moins au niveau d'une extrémité axiale de l'induit, comprenant une protection (16) pour les enroulements fixés coaxialement à l'extrémité axiale mise à nu de l'induit très près des enroulements pour tourner avec, la surface externe de la protection présentant un rayon non supérieur à l'induit, caractérisé en ce que la protection (16) est constituée par un ventilateur à écoulement axial dont les aubes (401-408) sont conformées pour tirer de l'air de refroidissement sur les enroulements et également pour protéger les enroulements d'un quelconque impact dû à la déviation de quelconques particules étrangères se déplaçant axialement en direction de ladite extrémité axiale de l'induit.

2. Induit selon la revendication 1, caractérisé en ce que les aubes (401-408) de la protection (16) de l'induit, telles que vues axialement, occupent plus de 50 % de l'aire efficace de la protection.

3. Induit selon la revendication 2, caractérisé en ce que les aubes (401-408) occupent plus de 75 % de l'aire efficace de la protection.

4. Induit selon l'une quelconque des revendications précédentes, caractérisé en ce qu'un ventilateur de refroidissement principal (14) est fixé coaxialement à ladite extrémité axiale de l'induit sur le ventilateur de refroidissement à écoulement axial en étant proche de celui-ci et ainsi, le ventilateur de refroidissement à écoulement axial contribue au fait que le ventilateur de refroidissement principal tire de l'air au travers du moteur et protège également les enroulements d'induit de tout impact avec des particules étrangères se déplaçant à l'aval sur l'induit et déviées en amont par le ventilateur principal.

5. Induit selon la revendication 4, caractérisé en ce que le ventilateur principale est un ventilateur à écoulement radial dont le rayon est supérieur à celui du ventilateur à écoulement axial.

6. Induit selon l'une quelconque des revendications précédentes, caractérisé en ce que le ventilateur à écoulement axial (16) est une cage conformée en dôme.

7. Induit selon l'une quelconque des revendications précédentes, caractérisé en ce que le ventilateur à écoulement axial (16) est un moulage plastique d'un seul tenant.

8. Induit selon l'une quelconque des revendications précédentes, caractérisé en ce que le ventilateur à écoulement axial (16) comprend au niveau de chaque extrémité axiale de lui-même une bague (20, 30) coaxiale à l'induit, les bagues étant connectées au moyen d'une pluralité d'aubes de ventilateur discrètes (401-408).

9. Moteur électrique comprenant un induit selon l'une quelconque des revendications précédentes.

10. Outil à moteur portable comprenant un moteur électrique selon la revendication 9.
